# EUROPÄISCHE PATENTSCHRIFT

(11) **EP 0 687 611 B1**
(45) Veröffentlichungstag und Bekanntmachung des Hinweises auf die Patenterteilung: **05.01.2000**
(21) Anmeldenummer: 95107900.3
(22) Anmeldetag: 24.05.1995
(51) Int. Cl.: B61D 17/00, B29C 53/58, B62D 29/04

(54) **Verfahren für die Herstellung von Fahrzeugstrukturen**
Method for the manufacturing of vehicle structures
Méthode pour la fabrication des structures des véhicules

(30) Priorität: 14.06.1994 CH 187194
(43) Veröffentlichungstag der Anmeldung: 20.12.1995
(73) Patentinhaber: INVENTIO AG, CH-6052 Hergiswil (CH)
(72) Erfinder: Anderegg, Kurt, Dipl.-Ing. ETH, CH-9424 Rheineck (CH); Oesch, Guido, CH-9400 Rorschacherberg (CH); Stettler, Andreas, Dipl.-Ing., CH-9426 Lutzenberg (CH)

(56) Entgegenhaltungen:
- EP-A- 0 582 544

## Beschreibung

Die vorliegende Erfindung bezieht sich auf ein Verfahren zur Herstellung von Fahrzeugstrukturen, vorzugsweise von Wagenkasten für Schienenfahrzeuge, mit selbsttragender Leichtbaustruktur aus faserverstärkten Kunststoffen, wobei mittels Wickeltechnik der zylindrische Längsteil eines Wagenkastens zusammen mit Verstärkungselementen, Installations- und Lüftungskanälen in kontinuierlich aufeinander folgenden Verfahrensschritten hergestellt wird.

Aus der Patentschrift GB 1 490 575 ist ein im Wickelverfahren hergestellter Wagenkasten bekannt, wie es im Oberbegriff des Anspruchs 1 beschrieben ist der eine innere Wickelschicht mit zum Teil eingeformten, vorspringenden und rundumlaufenden Versteifungsrippen, ein eingewickeltes Versteifungsgerippe aus Metall und zwischen innerer und äusserer Wickelschicht Aussparungen zur Aufnahme von Lüftung, Heizung, Elektroinstallationen, Beleuchtung und sanitäre Einrichtungen aufweist. Der einfache Sandwich-Aufbau aus innerer Wickelschicht, Zwischenisolation und äusserer Wickelschicht bildet die selbsttragende Struktur des Wagenkastens.

Die europäische Patentanmeldung 0 554 539 beschreibt ein ähnliches Verfahren zur Herstellung eines Wagenkastens in Wickeltechnik. Zusätzlich zu einem Verstärkungsgerippe werden an den Ecken angeordnete spezielle Längsprofile eingewickelt, und werden für später auszuschneidende Fenster- und Türöffnungen entsprechende Blinddeckel eingesetzt. Diese ebenfalls selbsttragende Leichtbaustruktur weist eine dünne, erste, innere Isolationsschicht auf, sowie eine zweite, äussere Isolationsschicht, welche die Dicke der Verstärkungsprofile aufweist.

Bei beiden genannten Verfahren weisen die Isolationsschichten infolge der eingewickelten metallischen Verstärkungsteile partielle Wärmebrücken auf. Ferner birgt die Paarung grundverschiedener Materialien die Risiken von Wickelschichtablösung und Korrosion infolge auftretender Dillatationskräfte bei Temperaturschwankungen. Zudem bedeutet ein separat herzustellendes Verstärkungsgerippe einen konzeptionellen Fremdkörper, der einen kontinuierlichen Ablauf des Herstellprozesses stört oder verunmöglicht.

Der vorliegenden Erfindung liegt die Aufgabe zugrunde, ein Verfahren anzuwenden und entsprechende Materialien einzusetzen, die diese Risiken ausschliessen und die eine wirtschaftlichere Herstellung einer Wagenkastenstruktur ermöglichen.

Diese Aufgabe wird durch die in den Ansprüchen gekennzeichneten Merkmale gelöst.

Die Vorteile der Erfindung bestehen im wesentlichen darin, dass der Aufbau der selbsttragenden Struktur aus gleichartigen Materialien besteht, dass der Aufwand für die Fenstermontage reduziert und die Wärmeisolation verbessert wird.

Weitere Vorteile sind darin zu sehen, dass die Festigkeit der Fahrzeugstruktur durch die Verfahrensschritte und Materialwahl den jeweiligen Erfordernissen angepasst werden kann und dass die Strukturfestigkeit mittels externer und interner Mittel noch weiter beeinflusst werden kann.

In den Zeichnungen ist ein Ausführungsbeispiel dargestellt und es zeigen:
Fig.1 einen Querschnitt einer Fahrzeugstruktur mit teilweise aufgeschnittener Struktur,
Fig.2 einen Querschnitt der Sandwichstruktur mit Fenster und Ringspant,
Fig.3 einen Querschnitt der Sandwichstruktur ausserhalb des Fensterbereiches mit Ringspant,
Fig.4 den gleichen Querschnitt mit freigelegten Fensterflächen,
Fig.5 den gleichen Querschnitt mit eingesetztem Abdeck- und Verstärkungsrahmen,
Fig.6 eine Aussenansicht der Fahrzeugstruktur im Fabrikationsstadium mit aufgeklebten Fenstern,
Fig.7 eine Aussenansicht der Fahrzeugstruktur nach weiteren Verfahrensschritten und
Fig.8 eine Aussenansicht der Fahrzeugstruktur nach Abschluss des Herstellverfahrens.

Das erfindungsgemässe Verfahren und dessen wesentliche Schritte wird im folgenden anhand der Figuren näher erläutert.

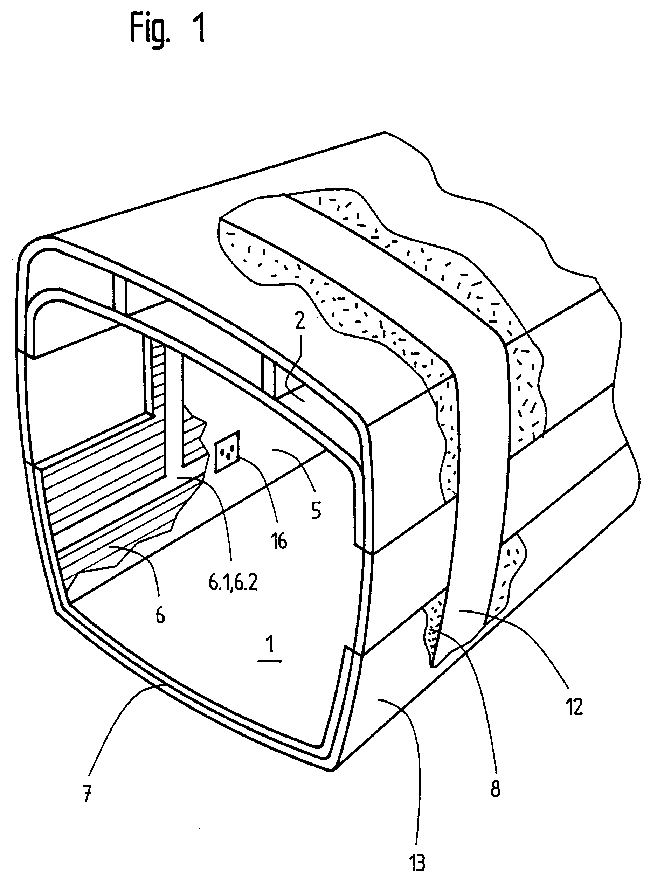

In der Fig.1 ist eine in Wickeltechnik hergestellte Fahrzeugstruktur 1 im Querschnitt und mit teilweise aufgeschnittener Struktur dargestellt. Die Innenfläche der Fahrzeugstruktur 1 wird von einer inneren Wickelschicht 5 gebildet. Ueber der inneren Wickelschicht 5 ist eine innere Isolationsschicht 6 aufgebracht, in welcher in ausgenommenen Nuten 6.1 Kabelkanäle 6.2 eingelegt sind. Ueber einem Kabelkanal 6.2 liegend ist in einer Seitenwand ein Geräteanschluss 16 dargestellt. Nach der inneren Isolationsschicht 6 folgt eine mittlere Wicklungsschicht 7, auf deren Oberseite im Dachbereich Deckenkanäle 2 in der Form eines einstückigen Kunststoffprofiles aufgelegt ist. In der darauf folgenden äusseren Isolationsschicht 8 befinden sich in den Seitenwänden die Wagenfenster 3. Zwischen den Fenstern 3 ist ein äusserer Spantsteg 12 eines eingewickelten Ringspantes sichtbar. Eine äussere Wickelschicht 13 bildet die Aussenhaut der Fahrzeugstruktur 1.

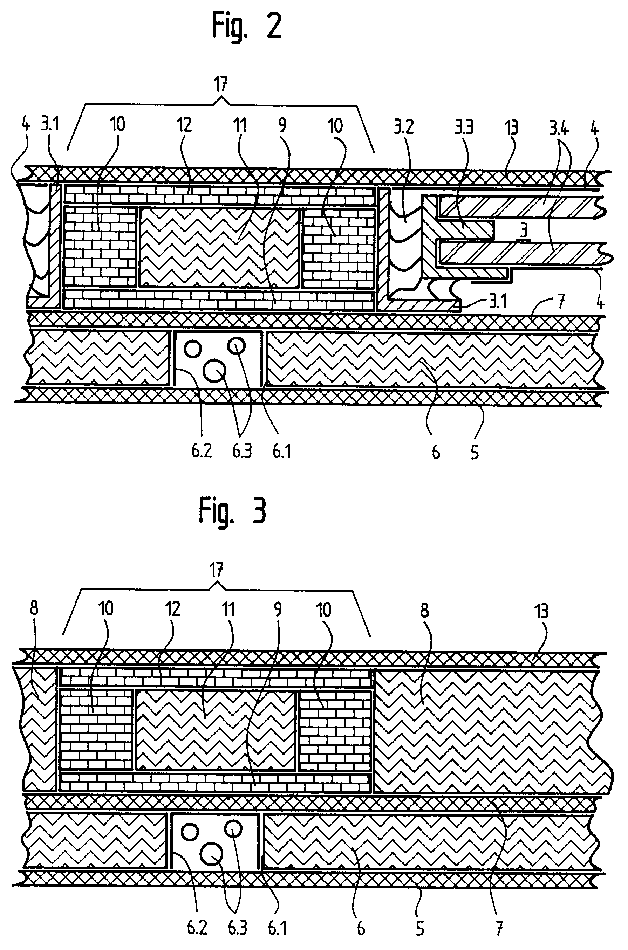

Der Schnitt durch die Wickelstruktur in Fig.2 ist im Fensterbereich der Fahrzeugstruktur 1 dargestellt. Zum Teil bereits dargestellte und benannte Einzelheiten in der Fig.1 sind hier vergrössert und deutlich dargestellt. Ferner sind die Proportionen der einzelnen Schichten zueinander der Realität angenähert. Die Struktur beginnt innenseitig mit der ersten, der inneren Wickelschicht 5, die eine Stärke von beispielsweise zwei bis fünf mm aufweisen kann. Ihr Aufbau besteht vorzugsweise aus harzgetränkten Glasfaserlagen in der Form von Rovings und Vliesen. Die auf dieser inneren Wickelschicht 5 aufgelegte und geklebte innere Isolationsschicht 6 ist einige cm stark und kann aus einem formstabilen, biegeelastischen und drucksteifen Schaumkunststoff beschaffen sein. In diese innere Isolationsschicht 6 werden die Nuten 6.1 ausgespart, ausgeschnitten oder ausgefräst und dann mit Kabelkanälen 6.2 bestückt. Im dargestellten Kabelkanal 6.2 sind einige Kabel 6.3 eingelegt. Die Kabelkanäle 6.2 sind vorzugsweise in der Richtung zur inneren Wickelschicht offen und in Richtung zur darauf liegenden mittleren Wicklungsschicht 7 geschlossen. Die Höhe der Kabelkanäle 6.2 entspricht, zwecks Erhalt einer planen Auflagefläche für die mittlere Wickelschicht 7, der Stärke der inneren Isolationsschicht 6. Mit dieser mittleren Wickelschicht 7 ist ein erster Sandwich-Aufbau der Fahrzeugstruktur 1 abgeschlossen.

Beim nächsten Verfahrensschritt werden vorfabrizierte Fenster 3 auf die mittlere Wickelschicht 7 aufgelegt und in ihrer endgültigen Lage fixiert. Die Fenster 3 bestehen aus einem äusseren Rahmen 3.1, einem mit einer Klebefuge 3.2 verbundenen inneren Rahmen 3.3 und einer im inneren Rahmen 3.3 eingesetzten Doppelverglasung 3.4. Die Aussenflächen und die Innenflächen der Fenster 3 sind je mit einer leicht abziehbaren Schutzfolie 4 überzogen

Die Fläche in der vertikalen Flucht oberhalb und unterhalb der Fenster 3 wird, wie in Fig.3 dargestellt, rundherum um die Fahrzeugstruktur 1 mit einer äusseren Isolationsschicht 8 von gleicher Dicke wie die äusseren Fensterrahmen 3.1 aufgefüllt.

In dem nun rundum laufenden freien Kanal mit der konstanten Breite eines Fensterpfostens wird mit den nächsten Verfahrensschritten ein die Struktur verstärkender Rundspant 17 eingewickelt. Als erstes Element des Rundspantes 17 wird in der Form einer mehrlagigen Wicklung in den Kanalgrund ein innerer Spantsteg 9 hineingewickelt. In der Mitte des inneren Spantsteges 9 wird dann ein Spantkern 11 eingesetzt, dessen Breite beispielsweise etwa die Hälfte der Kanalbreite beträgt, und der aus einem formstabilen, leichten Kernwerkstoff besteht. Die Höhe des Spantkerns 11 beträgt einige mm weniger als die Dicke der Fenster 3. In die so entstehenden Seitenkanäle werden Spantflansche 10 eingewickelt bis auf die gleiche Höhe des Spantkerns 11.

Als Abschlussteil des Ringspantes 17 wird auf die Isolationsschicht 11 und die beiden seitlichen Spantflansche 10 der äussere Spantsteg 12 aufgewickelt. Der Ringspant 17 bildet in der dargestellten Form ein die Struktur verstärkendes Rechteckprofil mit versteifendem Kern von grosser Festigkeit. Durch entsprechende Materialwahl wird eine mit einem Metallrundspant vergleichbare Festigkeit erreicht. Als hochfeste Materialien werden für den Ringspant 17 beispielsweise mit Spezialharz getränkte Kohlefasergewebe verarbeitet.

Der eingewickelte Ringspant 17 bildet mit der äusseren Isolationsschicht 8 und der Aussenseite der Fenster 3 eine gleichmässige plane Fläche als Grundlage für eine die Struktur abschliessende äussere Wickelschicht 13.

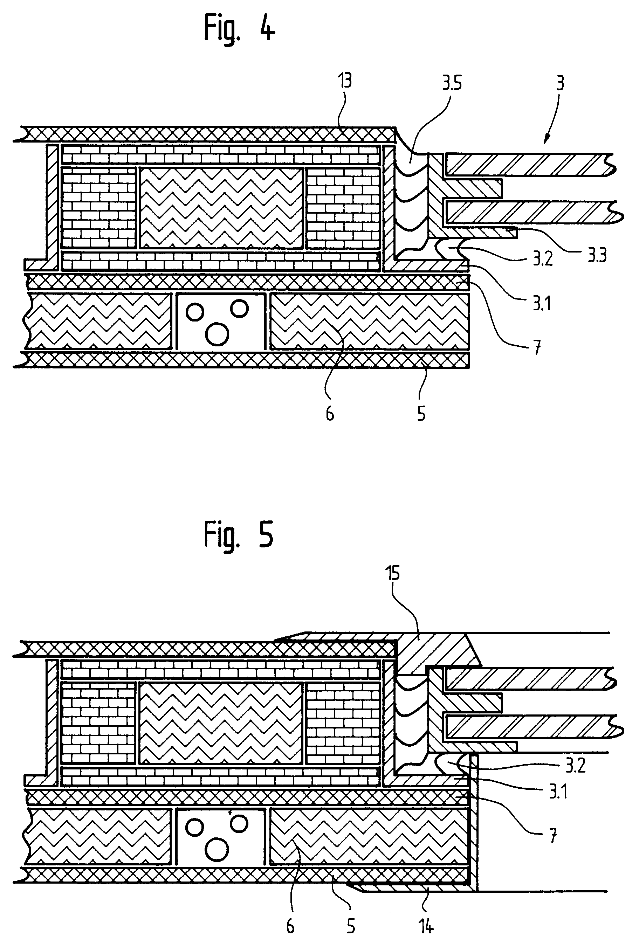

Die Fig.4 zeigt, wie die nach Abschluss der Wickeloperationen von der äusseren Wickelschicht 13 überdeckten Fenster 3 durch Herausschneiden dieser äusseren Wickelschicht 13 freigelegt werden. Nach Abzug der Schutzfolie 4 und Einbringen einer Abschlussfuge 3.5 ist die Aussenseite der Struktur weitgehend fertig hergestellt. Auf der Innenseite müssen mit den Konturen der Fenster 3 übereinstimmend bzw. bündig mit der Innenkante des äusseren Rahmens 3.1 die Strukturschichten 5, 6 und 7 bis auf die Fläche des inneren Rahmens 3.3 durchgetrennt werden, um die Innenseite der Fenster 3 freizulegen, auf welcher dann auch noch die Schutzfolie 4 abgezogen wird.

Auf der Innenseite der Struktur wird gemäss der Fig.5 zwecks Abdeckung der Schnittflächen der durchgetrennten Strukturschichten 5, 6, 7, des äusseren Winkels 3.1 und der Klebefuge 3.2 ein, die innere Wickelschicht 5 zusätzlich einige cm überdeckender, Winkelrahmen 14 eingesetzt. Als zusätzliches Element ist in dieser Darstellung auf der Aussenseite der Struktur beim Fenster 3 ein Verstärkungsrahmen 15 eingesetzt. Mit diesem Verstärkungsrahmen 15 werden erhöhte Forderungen bezüglich Festigkeit und Finish der Aussenhaut eines Fahrzeuges erfüllt.

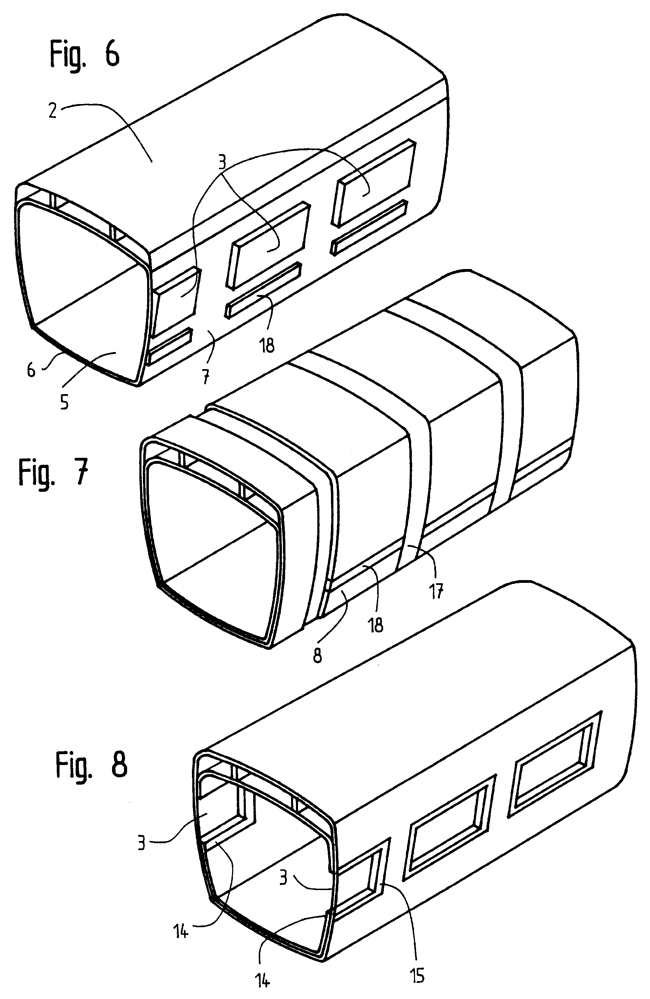

Die Fig.6 zeigt die perspektivische Aussenansicht der Fahrzeugstruktur 1 in einem für das erfindungsgemässe Verfahren wesentlichen Zwischenstadium. Es ist hier die erste Sandwichstruktur bestehend aus innerer Wickelschicht 5, innerer Isolationsschicht 6 und mittlerer Wicklungsschicht 7 vorhanden. Auf der Oberseite ist der vorbereitete Formteil mit den Deckenkanälen 2 aufgesetzt und auf den Seiten sind die Fenster 3 in ihrer endgültigen Lage angebracht.

Im gezeigten Beispiel sind, da es sich hier vorzugsweise um die Herstellung der Fahrzeugstruktur 1 für den Wagenkasten eines Schienenfahrzeuges handelt, je seitlich auf der Höhe der Pufferebene vorgefertigte Längsversteifungen 18 befestigt. Durch diese Längsversteifungen 18 erhält man die für ein Schienenfahrzeug geforderte Druckfestigkeit parallel zur Längsrichtung des Fahrzeuges. Die Längsversteifungen 18 sind material- und verfahrensmässig gleichartig wie die Ringspanten 17 und weisen deshalb auch mechanisch die gleiche Festigkeit auf. Sie sind im wesentlichen als gewickelte Rechteck-Hohlprofile oder Pultrusionsprofile mit ausgeschäumtem Hohlraum ausgebildet, weisen je die Länge eines Fensters 3 auf und stützen sich stirnseitig auf die Ringspanten 17 ab. Längsversteifungen 18 werden bei Bedarf auch noch an weiteren Stellen zwischen den Ringspanten 17 in Längsrichtung eingesetzt wie beispielsweise im Boden- und Deckenbereich und an den Eckpartien der Fahrzeugstruktur 1. Diese Fahrzeugstruktur 1 mit dem während dem Wickelverfahren erzeugten zusammenhängenden Verstärkungsgerippe bestehend aus Ringspanten 17 und Längsversteifungen 18, den eingesetzten Fenstern 3 mit den Verstärkungsrahmen 14, den Deckenkanälen 2, den drei Wickelschichten 5, 7, 13 und den beiden Isolationsschichten 6 und 8 weist eine sehr grosse Steifigkeit und Festigkeit bei hoher Güte der Wärme- und Schallisolation auf.

In der Fig.7 sind die Zwischenräume zwischen den Fenstern 3 und den Längsversteifungen 18 mit der äusseren Isolationsschicht 8 aufgefüllt und sind zwei der drei vorgesehenen Ringspanten 17 eingewickelt. Vorne ist der noch leere, ausgesparte Kanal für den dritten Ringspant 17 sichtbar. Aus Platzgründen ist in den Fig.6-8 längenmässig nur ein Teilausschnitt einer Fahrzeugstruktur 1 dargestellt. Ringspanten 17 werden bei einer Fahrzeugstruktur 1 für einen Wagenkasten nicht nur zwischen den Fenstern 3 eingesetzt, sondern zusätzlich dort wo eine Strukturverstärkung sinnvoll und nötig ist wie beispielsweise bei Türpfosten als Tragelement für die Türmechanik und als Randversteifung an Wagenenden für den Anbau von Stirnteilen und Führerkabinen.

Die Fig.8 zeigt die fertige Fahrzeugstruktur 1 mit eingesetzten Verstärkungsrahmen 15 und Winkelrahmen 14.

Das Resultat des erfindungsgemässen Verfahrens ist eine Doppelsandwichstruktur mit einer inneren, Kabelkanäle 6.2 aufnehmenden Isolationsschicht 6, die mit einer inneren und mittleren Wickelschicht 5 und 7 abgeschlossen ist und einer äusseren, die beschriebenen Versteifungen in der Form der Ringspanten 17 und Längsversteifungen 18 sowie die Fenster 3 und Deckenkanäle 2 aufnehmenden äusseren Isolationsschicht, die abschliessend mit einer äusseren Wickelschicht 13 überzogen wird. Von der Innenseite her können die Kabelkanäle 6.2 an vorgesehenen Stellen angebohrt und Geräteanschlüsse 16 ausgeführt werden wie beispielsweise für Beleuchtungs- und Audioanschlüsse oder für die Speisung privater Geräte wie Rasierer, PC's, Diktiergeräte, Schreibmaschinen etc. An der Aussenseite der Fenster können bei Bedarf die bereits beschriebenen Verstärkungsrahmen 15 eingesetzt werden. Der innere in die Klebefuge 3.2 hineinragende Rahmenteil nimmt in kraftschlüssiger Verbindung mit den Ringspanten 17 zusätzliche Längskräfte auf und der äussere sichtbare Teil ergibt eine ästhetisch und mechanisch befriedigende Abdeckung der Rahmenpartie des Fensters 3 und des Ausschnittes in der äusseren Wickelschicht 13.

## Patentansprüche

1. Verfahren zur Herstellung von Fahrzeugstrukturen (1), vorzugsweise Wagenkasten für Schienenfahrzeuge, mit einer selbsttragenden Leichtbaustruktur aus faserverstärkten Kunststoffen, wobei mittels Wickeltechnik der zylindrische Längsteil mit eingefügten Fenstern (3), Verstärkungselementen (17, 18), Installations- und Lüftungskanälen (6.2, 2) in kontinuierlich aufeinander folgenden Verfahrensschritten hergestellt wird und wobei die Verstärkungselemente in der Form von Ringspanten (17) ebenfalls in Wickeltechnik als Bestandteil der Fahrzeugstruktur (1) mit artgleichem Material hergestellt werden,
gekennzeichnet durch die folgenden Verfahrensschritte:, Wickeln einer ersten inneren Wickelschicht (5), Anbringen einer ersten isolierenden Zwischenschicht (6), Wickeln einer mittleren Wickelschicht (7), Anbringen einer zweiten, isolierenden Zwischenschicht (8) und Wickeln einer äusseren Wickelschicht (13), wobei Kabelkanäle (6,1, 6,2) in der ersten isolierenden Zwischenschicht (6) ausgespart, Lüftungskanäle (2) durch Einlegen eines Kunststoffprofiles im Dachbereich erzeugt und Ringspanten (17) in der zweiten isolierenden Zwischenschicht (8) eingewickelt werden.

2. Verfahren nach Anspruch 1,
dadurch gekennzeichnet,
dass beim Wickeln des Ringspantes (17) ein Hohlprofil fabriziert wird mit den Verfahrensschritten Wickeln eines inneren Spantsteges (9), Einlegen eines Spantkerns (11), Wickeln von Spantflanschen (10) und einem äusseren, das Hohlprofil abschliessenden Spantsteg (12).

3. Verfahren nach Anspruch 1
dadurch gekennzeichnet,
dass die Ringspanten (17) in einen der Verfahrensschritte in den vertikalen Zwischenräumen zwischen Fenstern (3), im Türpfostenbereich und an den Enden der Fahrzeugstruktur (1) eingewickelt werden.

4. Verfahren nach Anspruch 1,
dadurch gekennzeichnet,
dass in einem der Verfahrensschritte in der zweiten isolierenden Zwischenschicht (8) Längsversteifungen (18) für die Aufnahmen von Pufferkräften in Längsrichtung eingesetzt werden.

5. Verfahren nach Anspruch 1,
dadurch gekennzeichnet,
dass in einem der Verfahrensschritte sich auf die Ringspanten (17) abstützende, Fensterrahmen (3.3) und eine Klebefuge (3.2) abdeckende und mit einem Schenkel auf der äusseren Wickelschicht (13) aufliegende Verstärkungsrahmen (15) eingesetzt werden.

6. Verfahren nach einem der vorhergehenden Ansprüche,
dadurch gekennzeichnet,
dass in einem der Verfahrensschritte die Klebefuge (3.2) die Fensterausschnitte von Wickelschichten (5.7) und einer Isolationsschicht (6) mittels mit einem Schenkel auf der Innenseite der inneren Wickelschicht (5) aufliegenden Winkelrahmen (15) abgedeckt werden.

7. Fahrzeugstruktur, vorzugsweise für Wagenkasten von Schienenfahrzeugen, bestehend aus einer selbsttragenden Leichtbaustruktur aus faserverstärkten Kunststoffen, mittels Wickeltechnik fabriziertem zylindrischem Längsteil mit eingefügten Fenstern (3), Verstärkungselementen (17, 18), Installations- und Lüftungskanälen (6.2, 2),
dadurch gekennzeichnet,
dass die Fahrzeugstruktur als Doppelsandwichstruktur ausgebildet ist, welche eine innere Wickelschicht (5), eine ersten isolierende Zwischenschicht (6), eine mittlere Wickelschicht (7), eine zweite isolierende Zwischenschicht (8) und eine äussere Wickelschicht (13) aufweist, wobei Installationskanäle (6.2) in der ersten isolierenden Zwischenschicht (6), Ringspanten (17) und Längsversteifungen (18) in der zweiten isolierenden Zwischenschicht (8) angeordnet sind.

8. Fahrzeugstruktur nach Anspruch 7,
dadurch gekennzeichnet,
dass die Ringspanten als Hohlprofile mit formstabilem Kern ausgebildet sind und dass die gewickelten Teile innerer Spantsteg (9), Spantflansche (10) und äusserer Spantsteg (12) aus mit Spezialharz getränktem Kohlefasergewebe bestehen und dass für den Spantkern (11) ein formstabiler Kernwerkstoff vorgesehen ist.

9. Fahrzeugstruktur nach Anspruch 7,
dadurch gekennzeichnet,
dass als Lüftungskanäle (2) Kunststoffprofile zwischen der mittleren (7) und der äusseren (13) Wickelschicht im Dachbereich der Fahrzeugstruktur (1) vorhanden sind.

## Claims

1. Method for the production of vehicle structures (1), preferably coach bodies for rail vehicles, with a self-supporting lightweight construction of fibre-reinforced synthetic materials, wherein the cylindrical longitudinal part with inserted windows (3), reinforcing elements (17, 18) and installation and ventilation channels (6.2, 2) is produced by means of winding technique in continuously successive method steps and wherein the reinforcing elements are produced in the shape of annular frame elements (17) likewise in winding technique with material of the same kind as component of the vehicle structure (1), characterised by the following method steps: winding of a first inner wound layer (5), application of a first insulating intermediate layer (6), winding of a middle wound layer (7), application of a second insulating intermediate layer (8) and winding of an outer wound layer (13), wherein cable channels (6.1, 6.2) are hollowed out in the first insulating intermediate layer (6), ventilation channels (2) are produced by embedding a synthetic material profile in the roof region and annular frame elements (17) are wound into the second insulating intermediate layer (8).

2. Method according to claim 1, characterised in that on winding of the annular frame element (17) a hollow profile is produced by the method steps of winding an inner frame element web (9), embedding a frame element core (11), and winding frame element flanges (10) and an outer frame element web (12) closing off the hollow profile.

3. Method according to claim 1, characterised in that the annular frame elements (17) are wound-in in one of the method steps in the vertical intermediate spaces between windows (3) in the door post region and at the ends of the vehicle structure (1).

4. Method according to claim 1, characterised in that in one of the method steps longitudinal stiffening members (18) are inserted into the second insulating intermediate layer (8) in the longitudinal direction for the absorption of buffer forces.

5. Method according to claim 1, characterised in that in one of the method steps reinforcing frames (15), which bear on the annular frame elements (17), cover the window frames (3.3) and a glued joint (3.2) and rest by one limb on the outer wound layer (13), are inserted.

6. Method according to one of the preceding claims, characterised in that in one of the method steps the glued joint (3.2) and the window cut-outs of the wound layers (5, 7) and of an insulating layer (6) are covered by means of angle frames (14), which rest by one limb on the inward side on the inner wound layer (5).

7. Vehicle structure, preferably for coach bodies for rail vehicles, consisting of a self-supporting lightweight construction of fibre-reinforced synthetic materials, a cylindrical longitudinal part with inserted windows (3), reinforcing elements (17, 18) and installation and ventilation channels (6.2, 2) produced by means of winding technique, characterised in that the vehicle structure is constructed as a double sandwich structure which has an inner wound layer (5), a first insulating intermediate layer (6), a middle wound layer (7), a second insulating intermediate layer (8) and an outer wound layer (13), wherein installation channels (6.2) are arranged in the first insulating intermediate layer (6) and annular frame elements (17) and longitudinal stiffening members (18) are arranged in the second insulating intermediate layer (8).

8. Vehicle structure according to claim 7, characterised in that the annular frame elements (17) are formed as hollow profiles with a core stable in shape and that the wound parts of inner frame element web (9), frame element flange (10) and outer frame element web (12) consist of carbon-fibre tissue saturated with special resin and a core material stable in shape is used for the frame element core (11).

9. Vehicle structure according to claim 7, characterised in that synthetic material profiles are present, as ventilation channels (2), between the middle (7) and the outer (13) wound layer in the roof region of the vehicle structure (1).

## Revendications

1. Procédé pour la fabrication de structures de véhicules (1), de préférence de caisses pour véhicules ferroviaires, présentant une structure légère monocoque en matières plastiques renforcées par fibres, selon lequel la partie longitudinale cylindrique est fabriquée suivant une technique d'enroulement lors de phases qui se succèdent en continu, avec des fenêtres (3), des éléments de renforcement (17, 18) et des conduites d'installation et d'aération (6.2, 2) encastrés, et les éléments de renforcement sont fabriqués eux aussi suivant une technique d'enroulement à partir d'un matériau du même type, sous la forme d'anneaux de raidissement (17), comme éléments constitutifs de la structure de véhicule (1),
caractérisé par les phases de procédé suivantes :
enroulement d'une première couche d'enroulement intérieure (5), application d'une première couche intermédiaire isolante (6), enroulement d'une couche d'enroulement centrale (7), application d'une seconde couche intermédiaire isolante (8) et enroulement d'une couche d'enroulement extérieure (13), des conduites de câbles (6.1, 6.2) étant réalisées par évidement dans la première couche intermédiaire isolante (6) et des conduites d'aération (2) étant formées grâce à la mise en place d'un profilé en matière plastique dans la zone du toit, et des anneaux de raidissement (17) étant enroulés dans la seconde couche intermédiaire isolante (8).

2. Procédé selon la revendication 1, caractérisé en ce que lors de l'enroulement de l'anneau de raidissement (17), on fabrique un profilé creux en enroulant une branche d'anneau intérieure (9), en posant un noyau d'anneau (11), et en enroulant des ailes d'anneau (10) et une branche d'anneau extérieure (12) qui achève le profilé creux.

3. Procédé selon la revendication 1, caractérisé en ce que lors de l'une des phases du procédé, les anneaux de raidissement (17) sont enroulés dans les espaces intermédiaires verticaux entre les fenêtres (3), dans la zone des montants de portes et aux extrémités de la structure de véhicule (1).

4. Procédé selon la revendication 1, caractérisé en ce que lors de l'une des phases du procédé, des renforcements longitudinaux (18) sont placés dans la seconde couche intermédiaire isolante (8) pour recevoir les forces de tamponnement dans le sens longitudinal.

5. Procédé selon la revendication 1, caractérisé en ce que lors de l'une des phases du procédé, on pose des châssis de fenêtres (3.3) qui s'appuient sur les anneaux de raidissement (17), et des châssis de renforcement (15) qui couvrent un joint de collage (3.2) et qui sont posés avec une branche sur la couche d'enroulement extérieure (13).

6. Procédé selon l'une des revendications précédentes, caractérisé en ce que lors de l'une des phases du procédé, le joint de collage (3.2) et les parties découpées pour les fenêtres dans les couches d'enroulement (5, 7) et dans une couche isolante (6) sont couverts à l'aide de châssis d'angle (14) posés avec une branche sur le côté intérieur de la couche d'enroulement intérieure (5).

7. Structure de véhicule, de préférence pour des caisses de véhicules ferroviaires, formée d'une structure légère monocoque en matières plastiques renforcées par fibres qui est définie par un élément longitudinal cylindrique fabriqué à l'aide d'une technique d'enroulement et comportant des fenêtres (3), des éléments de renforcement (17, 18) et des conduites d'installation et d'aération (6.2, 2) encastrés,
caractérisée en ce que la structure de véhicule est conçue comme une structure sandwich double qui comprend une couche d'enroulement intérieure (5), une première couche intermédiaire isolante (6), une couche d'enroulement centrale (7), une seconde couche intermédiaire isolante (8) et une couche d'enroulement extérieure (13), des conduites d'installation (6.2) étant disposées dans la première couche intermédiaire isolante (6) tandis que des anneaux de raidissement (17) et des renforcements longitudinaux (18) sont disposés dans la seconde couche intermédiaire isolante (8).

8. Structure de véhicule selon la revendication 7, caractérisée en ce que les anneaux de raidissement sont conçus comme des profilés creux à noyau indéformable, en ce que les éléments enroulés constitués par la branche d'anneau intérieure (9), les ailes d'anneau (10) et la branche d'anneau extérieure (12) se composent d'un tissu en fibres de carbone imprégné d'une résine spéciale, et en ce qu'il est prévu pour le noyau d'anneau (11) un matériau de noyau indéformable.

9. Structure de véhicule selon la revendication 7, caractérisée en ce qu'il est prévu comme conduites d'aération (2) des profilés en matière plastique qui sont disposés dans la zone du toit de la structure de véhicule (1), entre les couches d'enroulement centrale (7) et extérieure (13).
